# DEMANDE DE BREVET EUROPEEN

(11) **EP 4 733 200 A1**
(43) Date de publication de la demande: **29.04.2026**
(21) Numéro de dépôt: 25209806.6
(22) Date de dépôt: 20.10.2025
(51) Int. Cl.: B64G 1/10, B64G 1/64, B64G 1/28

(54) **DISPOSITIF DE NEUTRALISATION D'UN SATELLITE ARTIFICIEL ET PROCÉDÉ ASSOCIÉ**

(30) Priorité: 23.10.2024 FR 2411483
(71) Demandeur: U-Space, 31400 Toulouse (FR)
(72) Inventeur: HENNART, Florent, 31860 PINS-JUSTARET (FR)
(74) Mandataire: Bringer IP

(57) **Abrégé**

L'invention concerne un dispositif de neutralisation (100) d'un satellite cible (200) présentant un mode de fonctionnement nominal ledit dispositif de neutralisation comprenant :
un mécanisme d'abordage (300) configuré pour pouvoir relier mécaniquement ledit dispositif de neutralisation (100) et ledit satellite cible (200) ;
un effecteur commandable (400) configuré pour présenter un état passif dans lequel il n'altère pas le mode de fonctionnement nominal dudit satellite cible (200), et état actif dans lequel il altère le mode de fonctionnement nominal dudit satellite cible (200) ;
une unité d'acquisition (500) d'informations d'opération ;
une unité de traitement (600) comprenant un module de commande effecteur (610) configuré pour pouvoir basculer ledit effecteur commandable dudit état passif audit état actif et inversement, une fois ledit mécanisme d'abordage (300) relié mécaniquement audit satellite cible (200), en fonction desdites informations d'opération.

## Description

### Domaine technique de l'invention

L'invention concerne un dispositif de neutralisation d'un satellite artificiel. Plus particulièrement, l'invention concerne un dispositif de neutralisation destiné à être embarqué sur un véhicule spatial et configuré pour neutraliser sur commande un satellite artificiel, dit satellite cible via un effecteur commandable.

### Arrière-plan technologique

La neutralisation des satellites artificiels est un domaine complexe mêlant des considérations technologiques, stratégiques et juridiques.

Les satellites artificiels ont une durée de vie limitée en raison de l'usure de leurs composants ou de la diminution de leur carburant pour rester en orbite. Lorsque cela se produit, il est nécessaire de les désorbiter pour éviter qu'ils ne deviennent des débris dangereux.

Dans le cadre des conflits spatiaux ou des stratégies de défense, certains pays peuvent également chercher à neutraliser des satellites ennemis utilisés pour la communication, l'espionnage ou la navigation.

Dans un contexte plus général de congestion spatiale, plusieurs méthodes ont été développées pour neutraliser un satellite artificiel. Parmi celles-ci, on retrouve la désorbitation contrôlée qui consiste à faire redescendre un satellite sur Terre ou à le transférer vers une orbite cimetière, notamment pour les satellites géostationnaires. Les satellites sont souvent équipés de systèmes de propulsion pour ajuster leur orbite. À la fin de leur vie, les satellites peuvent enclencher un mode survie et ces systèmes peuvent être utilisés pour désorbiter le satellite de manière contrôlée, en le faisant rentrer dans l'atmosphère où il se désintégrera. L'inconvénient majeur de cette solution reste la production inexorable de débris et déchets spatiaux.

Une autre approche repose sur l'emploi de remorqueurs spatiaux. Cette technologie en développement consiste à envoyer un satellite ou un vaisseau pour attraper un satellite défaillant et le rediriger vers une orbite plus basse ou vers une orbite cimetière.

Dans un cadre militaire ou de défense spatiale, il existe différentes méthodes pour neutraliser un satellite ennemi ou obsolète. Parmi ces méthodes, on retrouve la neutralisation via des systèmes d'armes reposant sur l'emploi de missiles antisatellites (ASAT). Ces missiles sont lancés depuis la Terre ou depuis une plateforme spatiale pour détruire un satellite ciblé. Cette méthode reste controversée, car elle peut créer une grande quantité de débris spatiaux dangereux et contribuer à la théorie du syndrome de Kessler selon laquelle un nuage de débris engendré par chaque destruction pollue plusieurs orbites. De ce fait, si les orbites sont encombrées de trop nombreux débris, les satellites encore intègres qui les occupent seront à leur tour détruit, venant aggraver encore plus la pollution orbitale. Cela peut donner lieu à une réaction en chaine incontrôlable.

On retrouve également des systèmes à énergie dirigée comme des lasers ou micro-ondes à haute énergie pour perturber ou désactiver les composants électroniques d'un satellite sans nécessairement le détruire physiquement. Bien que ce moyen de neutralisation soit plus propre, il reste toutefois assez expérimental et est coûteux en énergie.

Dans le domaine de la neutralisation, l'art antérieur prévoit principalement des systèmes de captures de débris spatiaux pour des satellites inactifs ou déjà défaillants qu'il convient de désorbiter. Ces moyens de captures sont des moyens de capture physiques reposant sur l'emploi de harpons ou de filet dans le but de désengorger l'espace. Ces moyens ne comprennent en outre pas d'effecteurs commandables pour la neutralisation ou la perturbation d'un satellite cible « actif », notamment à visée militaire.

Dans les approches impliquant un mécanisme d'abordage et de capture, les solutions connues se limitent à des systèmes de capture, de remorquage ou de stabilisation, sans pour autant envisager une perturbation volontaire et maîtrisée de l'avionique de la cible. Ces solutions connues ne proposent aucunement une activation sélective et commandée après une interaction physique avec la cible.

Les inventeurs souhaitent donc proposer une solution visant à remédier aux inconvénients de l'art antérieur.

### Objectifs de l'invention

L'invention vise à fournir, dans au moins un mode de réalisation, un dispositif de neutralisation capable d'identifier et de se fixer à un satellite cible en activité et présentant un mode de fonctionnement nominal.

L'invention vise également à fournir un dispositif capable de réaliser une neutralisation fonctionnelle et commandée d'un satellite cible.

L'invention vise aussi à fournir, dans au moins un mode de réalisation, un dispositif permettant d' altérer temporairement ou définitivement le fonctionnement nominal d'un satellite cible.

L'invention vise aussi à fournir, dans au moins un mode de réalisation, un dispositif permettant de réduire temporairement ou définitivement les performances d'un satellite cible.

L'invention vise aussi à fournir, dans au moins un mode de réalisation, un dispositif capable de neutraliser une cible sur commande.

L'invention vise aussi à fournir, dans au moins un mode de réalisation, un dispositif capable de neutraliser une cible de façon réversible.

L'invention vise également à fournir, dans au moins un mode de réalisation, un dispositif capable de neutraliser un satellite cible, en limitant la production de débris spatiaux.

L'invention vise également à fournir un procédé de neutralisation d'un satellite cible, ledit procédé étant mis œuvre par un dispositif de neutralisation destiné à être embarqué sur un véhicule spatial.

L'invention vise en outre à fournir un dispositif spatial apte à neutraliser, sur commande et sans destruction, un satellite artificiel en fonctionnement nominal, tout en limitant la production de débris spatiaux.

### Exposé de l'invention

Pour ce faire, l'invention concerne un dispositif de neutralisation d'un satellite artificiel, dit satellite cible, ledit satellite cible présentant au moins un mode de fonctionnement, dit mode nominal, caractérisé en ce que ledit dispositif de neutralisation comprend :
- un mécanisme d'abordage configuré pour pouvoir relier mécaniquement ledit dispositif de neutralisation et ledit satellite cible ;
- un effecteur commandable configuré pour présenter un état, dit état passif dans lequel il n'altère pas le mode de fonctionnement nominal dudit satellite cible, et un état, dit état actif dans lequel il altère ledit mode de fonctionnement nominal dudit satellite cible ;
- une unité d'acquisition d'informations représentatives dudit satellite cible et de l'environnement dudit dispositif de neutralisation, dites informations d'opération ;
- une unité de traitement configurée pour traiter lesdites informations d'opération acquises, et comprenant un module de commande, dit module de commande effecteur, configuré pour pouvoir basculer ledit effecteur commandable dudit état passif ou dit état actif et inversement, une fois ledit mécanisme d'abordage relié mécaniquement audit satellite cible, en fonction desdites informations d'opération.

L'invention se caractérise également en ce que ledit dispositif de neutralisation est configuré pour activer sur commande ledit effecteur commandable une fois ce dernier relié audit satellite cible, afin de perturber ou altérer ledit mode nominal dudit satellite cible, de manière temporaire et/ou définitive.

Dans tout le texte en suivant, et sauf indication contraire, le terme « mode de fonctionnement nominal » se rapporte au fonctionnement normal d'un satellite, c'est-à-dire à un mode de fonctionnement où l'avionique embarquée, les différents moyens de navigation et/ou de calculs fonctionnent normalement, dans un état non perturbé. Ce mode de fonctionnement « nominal » peut également être défini par opposition à un mode de fonctionnement « perturbé » ou « altéré », qui sont des termes équivalents dans la présente demande et qui définissent un mode de fonctionnement où le satellite, notamment ledit satellite cible, n'est plus en mesure de fonctionner normalement, de façon temporaire et/ou définitive. Le mode survie d'un satellite peut de ce fait être assimilé à un mode de fonctionnement altéré ou perturbé du satellite.

Dans tout le texte on entend que l'effecteur commandable est un élément distinct du mécanisme d'abordage.

Dans le contexte de l'invention, la « neutralisation » ne se réduit pas à une désorbitation, c'est-à-dire à une fin de vie mécanique du satellite. Elle désigne l'altération intentionnelle du mode de fonctionnement nominal d'un satellite actif, c'est-à-dire un satellite dont les systèmes d'avionique, de propulsion, de communication ou de traitement de données sont encore pleinement opérationnels.

Le « mode nominal » correspond au fonctionnement normal du satellite dans sa mission (communication, observation, navigation, etc...), par opposition à un mode altéré ou de survie, dans lequel ses fonctions sont perturbées ou réduites.

Ainsi, neutraliser un satellite au sens de l'invention consiste à modifier ce mode nominal, par un effet physique, électromagnétique, thermique, mécanique ou autre, produit par un effecteur de contact activable sur commande, et non simplement à déplacer ou désorbiter un satellite inactif.

Dans tout le texte en suivant, les termes « satellite cible » ou « cible » sont définis comme équivalents sauf indication contraire.

Dans tout le texte en suivant, le dispositif de neutralisation est un satellite artificiel, préférentiellement un nanosatellite à unité cubique (U) de type *CubeSat.* Le dispositif de neutralisation selon l'invention peut également être un nanosatellite construit sur la base d'unités d'autres dimensions que les unités cubiques (U) de *CubeSat.* Préférentiellement, le dispositif de neutralisation selon l'invention comprend une ou plusieurs unités cubiques (U), préférentiellement 3 unités cubiques (3U). Il est entendu que ledit dispositif de neutralisation peut comprendre une ou plusieurs plateformes embarquant une charge utile, le dispositif de neutralisation étant susceptible d'embarquer une charge utile proportionnelle au nombre d'unités cubiques (U) formant le nanosatellite.

On définit, au sens de l'invention, la charge utile comme correspondant à l'ensemble des moyens et équipements nécessaires embarqués sur ledit dispositif de neutralisation pour accomplir une tâche de neutralisation et/ou d'abordage d'un satellite artificiel, dit satellite cible.

Il est entendu, au sens de la présente invention, que ledit dispositif de neutralisation est un satellite artificiel, préférentiellement un nanosatellite, compatible avec un environnement d'orbite terrestre basse (LEO) et un environnement d'orbite géostationnaire (GEO).

Le dispositif de neutralisation selon l'invention est destiné à être embarqué dans un véhicule spatial pour être libéré dans l'espace. En outre ledit dispositif peut être mis en orbite à l'aide d'un vaisseau mère, d'un lanceur de type fusée ou d'un véhicule spatial connu de la personne du métier et approprié pour la mise en orbite des satellites artificiels, notamment des nanosatellites.

Le mécanisme d'abordage dudit dispositif de neutralisation peut être choisi parmi un harpon, des agrafes ou encore une pince et peut être mû par une source d'énergie mécanique telle qu'un moteur ou un ressort par exemple ou encore tout autre moyen permettant d'obtenir la mobilité du mécanisme d'abordage. Il peut en outre s'agir d'un mécanisme d'abordage réversible, pouvant s'extraire de la cible après abordage.

Selon l'invention, le dispositif de neutralisation permet avantageusement d'obtenir une liaison mécanique fiable entre ledit dispositif et ledit satellite cible lors de l'abordage.

Le dispositif de neutralisation permet d'activer sur commande un effecteur commandable une fois le dispositif de neutralisation relié audit satellite cible. Avantageusement, l'invention permet un suivi physique de la cible tout en limitant la production de déchets spatiaux lors de l'abordage.

L'invention permet également au dispositif de collecter des informations sur ledit satellite cible et d'activer en conséquence et au besoin ce dernier pour perturber ou altérer son fonctionnement nominal, de manière temporaire et/ou définitive.

Contrairement aux moyens armés utilisables à distance, l'effecteur selon l'invention est préférentiellement un effecteur de contact, nécessitant un mécanisme d'abordage pour établir une liaison mécanique entre ledit dispositif de neutralisation et ledit satellite cible.

L'effecteur est commandable via un module de commande de l'unité de traitement.

Contrairement aux dispositifs connus qui se limitent à assurer la capture ou la désorbitation d'objets spatiaux inactifs (tels que des débris ou des satellites hors service), le dispositif de l'invention vise à intervenir sur un satellite encore opérationnel tandis que les systèmes antérieurs se bornent à établir une liaison mécanique, voire à modifier la trajectoire orbitale de la cible, sans jamais altérer son fonctionnement interne ni interagir avec ses sous-systèmes.

À l'inverse, le dispositif selon l'invention comprend un effecteur commandable, activable uniquement après abordage, dont la fonction est de perturber ou d'altérer, de manière temporaire ou définitive, le mode nominal du satellite cible. Cette approche est remarquable en ce qu'elle dépasse la simple capture physique ou la manipulation orbitale, puisqu'elle introduit une logique de neutralisation sélective, contrôlée et réversible d'un satellite encore fonctionnel, sans destruction et sans génération de débris.

Avantageusement et selon l'invention, ledit dispositif comprend en outre une pluralité de capteurs dont au moins un moyen de mesure de distance, configuré pour acquérir des données de distance entre ledit dispositif et ledit satellite cible.

Ainsi et selon l'invention, ledit dispositif permet d'obtenir une mise à jour en temps réel de la mesure de la position relative entre ce dernier et ledit satellite cible.

Il est entendu que ledit dispositif de neutralisation puisse comprendre une pluralité de capteurs associés à des moyens de guidage et/ou d'acquisition d'images pour assurer son orientation dans l'espace. À ce titre, et de manière non limitative, ledit dispositif peut comprendre une caméra d'acquisition d'image dans le spectre visible ou dans l'infrarouge comme par exemple une caméra thermique, un radar, un système de télédétection par laser plus connu sous l'acronyme LIDAR.

Avantageusement et selon l'invention, les informations d'opération sont des informations provenant du sol, du véhicule spatial, ou encore des capteurs dudit dispositif de neutralisation.

Par informations provenant du sol, on entend les informations émises à partir d'une base terrestre.

Ainsi et selon l'invention, le dispositif de neutralisation comprend des moyens de communication et peut être guidé par plusieurs opérateurs ou encore fonctionner de manière autonome en fonction des informations d'opération captées par capteurs dudit dispositif de neutralisation.

Avantageusement et selon l'invention, ladite unité de traitement comprend en outre un module d'identification, configuré pour identifier ledit satellite cible à partir desdites informations d'opération.

Ainsi et selon l'invention, le dispositif de neutralisation peut identifier le corps du satellite cible et notamment l'orientation des faces de ce dernier pour identifier un point d'abordage.

Avantageusement et selon l'invention, ladite unité de traitement comprend en outre un module de contrôle d'abordage, configuré pour contrôler la liaison mécanique par ledit mécanisme d'abordage entre ledit dispositif de neutralisation et ledit satellite cible.

Par module de contrôle d'abordage, on entend un module conçu pour évaluer l'état de la liaison mécanique entre ledit dispositif de neutralisation et ledit satellite cible. Ce module a pour rôle principal de vérifier plusieurs aspects parmi la présence d'une telle liaison mécanique, la qualité de ladite liaison, et éventuellement la surveillance continue de cette dernière.

Concernant la présence de la liaison mécanique, ledit module d'abordage détecte si liaison est réalisée ou non.

Concernant la qualité de ladite liaison, ledit module d'abordage évalue si la liaison est bien exécutée en respect des critères techniques ou de sécurité requis tels que l'alignement, le serrage, le verrouillage, l'absence de jeu etc...

Concernant la surveillance continue, ledit module d'abordage peut comprendre des capteurs mécaniques comme des capteurs de force ou de position, des moyens de contrôle non destructifs, tels que les ultrasons, les rayons x, ou des systèmes de vision connus de la personne du métier.

Ainsi et selon l'invention, le dispositif de neutralisation bénéficie d'une sécurité assurant la fiabilité de la liaison mécanique et que l'effecteur commandable puisse être utilisé.

Avantageusement et selon l'invention, le mécanisme d'abordage comprend en outre un moyen de fixation configuré pour assurer une liaison permanente entre ledit dispositif de neutralisation et ledit satellite cible.

Ainsi et selon l'invention, le dispositif de neutralisation permet d'agir tel un traceur ou une balise de contact, et permet d'opérer plus tard dans le temps tout en suivant la cible.

Avantageusement et selon l'invention, le moyen de fixation assurant la liaison entre ledit dispositif de neutralisation et ledit satellite est choisi parmi une cheville autoforeuse, une colle, une mousse expansive, un lasso, un aimant permanent, une agrafe, une pince motorisée ou une soudure.

Ladite colle peut être composée d'un mélange de plusieurs éléments chimiques dont la mise en contact avec le satellite cible par le mécanisme d'abordage permet d'accélérer le temps de fixation. Elle peut également être chauffée ou refroidie par un moyen intégré audit mécanisme de fixation tel qu'une résistance de chauffage ou encore un cryostat lors du contact entre ledit mécanisme d'abordage et ledit satellite cible.

Le lasso peut être un filin formant une boucle dont le diamètre peut être varié par un moteur à double sens pour enrouler ou dérouler ledit filin. La fixation du mécanisme d'abordage sur la cible est assurée après avoir placé le lasso autour de dudit satellite cible et avoir enroulé le filin jusqu'au contact entre le dispositif de neutralisation et le satellite cible.

L'aimant permanent peut être employé par le dispositif de neutralisation sur une surface ferromagnétique du satellite cible. Cet aimant peut être un électroaimant permettant le contact entre le dispositif et une surface ferromagnétique dudit satellite cible lorsqu'il est alimenté par un courant électrique.

Avantageusement et selon l'invention, l'effecteur commandable est choisi parmi un générateur de couple ou de vibrations, un générateur de décharge électrique, un générateur d'ondes électromagnétiques, un générateur de chaleur ou de froid, ou un générateur d'aérosols.

L'effecteur commandable est préférentiellement une roue à inertie équipée d'un balourd, générateur de vibrations afin de perturber ledit satellite cible. Selon ce mode de réalisation préféré, la roue à inertie peut être également utilisée par ledit dispositif de neutralisation afin de s'orienter avant la mise en œuvre du mécanisme d'abordage.

Dans un autre mode de réalisation, l'effecteur commandable permet de générer des perturbations électromagnétiques ou des dégradations sur les moyens de communication et de localisation électromagnétique de la cible, notamment avec un moyen de type impulsion électromagnétique (IEM).

Dans un autre mode de réalisation, l'effecteur commandable comprend un générateur de décharge électrique configuré pour générer des décharges électriques visant à perturber l'appareillage et/ou les équipements dudit satellite cible.

Dans un autre mode de réalisation, l'effecteur comprend un générateur d'aérosols, notamment par pulvérisation d'une substance sur ledit satellite cible en vue de réduire la capacité des cellules solaires équipant éventuellement ce dernier, ou encore d'obfusquer les optiques et/ou les moyens de communication de ce dernier.

Avantageusement et selon l'invention, le mécanisme d'abordage est un harpon.

Le harpon peut comprendre une tête en titane, en acier renforcé ou tout autre matériau connu de la personne du métier capable de pénétrer la surface d'un objet spatial. Ledit harpon comprend également une tige flexible ou rigide reliant la tête au mécanisme d'abordage. En outre, le harpon peut comprendre un filin, une corde ou un câble de liaison reliant ledit harpon à son système de lancement. Il est entendu qu'un tel système de lancement est connu de la personne du métier et qu'il peut être agencé sur une plateforme dudit dispositif de neutralisation.

Ledit harpon peut comprendre un système de rétraction intégré pour rapprocher ledit dispositif de neutralisation et ledit satellite cible, ou pour maintenir une tension sur ledit harpon afin de prévenir la perte du lien avec ledit satellite cible. Ledit harpon peut en outre comprendre un moyen d'ancrage rétractable ou un mécanisme expansif permettant l'obtention d'une meilleure prise à la surface dudit satellite cible.

Dans un mode de réalisation particulier, ledit harpon peut comprendre un injecteur configuré pour injecter une substance expansive dans la cible et solidifier l'accroche dudit harpon afin d'empêcher toute rétractation dudit harpon.

Dans un autre mode de réalisation particulier, l'effecteur commandable est un générateur de décharge électrique intégré audit harpon.

Avantageusement et selon l'invention, ledit dispositif comprend en outre un système de propulsion.

Ledit système de propulsion peut comprendre une ou une pluralité de tuyères permettant un pilotage dudit dispositif de neutralisation. Ledit système peut également comprendre un ensemble de roues à réaction permettant d'orienter la direction de la poussée. Le système de propulsion peut en outre comprendre un moteur à ergols, de type moteur-fusée connu de la personne du métier.

Ainsi et selon l'invention, le dispositif de neutralisation comprend un système propulsif lui permettant de s'approcher au plus près de sa cible, à une distance propice à l'abordage.

Avantageusement et selon l'invention, ledit dispositif comprend en outre un système de production et de stockage d'énergie.

Les systèmes de production et de stockage d'énergie susceptibles d'être utilisés dans l'invention peuvent être choisis parmi les batteries de stockages d'énergie, les piles à combustible, les cellules solaires, les générateurs thermoélectriques à radioisotope, ou les systèmes de conversion thermoélectrique connus de la personne du métier.

L'invention concerne également dispositif de neutralisation caractérisé en tout ou partie des caractéristiques mentionnées précédemment et/ou en suivant.

L'invention concerne également un procédé de neutralisation d'un satellite artificiel, dit satellite cible, ledit satellite cible présentant au moins un mode de fonctionnement nominal, ledit procédé étant mis en œuvre par un dispositif de neutralisation destiné à être embarqué dans un véhicule spatial, ledit procédé étant caractérisé en ce qu'il comprend les étapes suivantes :
- une étape E1 d'acquisition d'informations représentatives dudit satellite cible et de l'environnement dudit dispositif de neutralisation, dites informations d'opération ;
- une étape E2 de traitement desdites informations d'opération ;
- une étape E3 d'abordage dudit satellite cible ;
- une étape E4 de neutralisation dudit satellite cible, en fonction desdites informations d'opération.

Ainsi et selon l'invention, il est possible de prévoir un cycle de commande de l'effecteur entre son état actif et son état passif jusqu'à la fin de vie du dispositif de neutralisation et/ou dudit satellite cible.

L'étape E3 d'abordage peut être réalisée par un mécanisme d'abordage d'un dispositif de neutralisation.

L'étape E4 de neutralisation peut être effectuée sur commande grâce à un effecteur commandable, entre un état passif, dans lequel il ne modifie pas le mode de fonctionnement nominal dudit satellite cible, et un état actif dans lequel ledit effecteur commandable altère le mode de fonctionnement nominal dudit satellite cible, ledit effecteur commandable basculant sur commande dudit état passif audit état actif et inversement, une fois ledit mécanisme d' abordage relié mécaniquement audit satellite cible, en fonction desdites informations d'opération.

Avantageusement et selon l'invention, le procédé comprend en outre une étape E1.1 d'identification dudit satellite cible.

Avantageusement et selon l'invention, le procédé comprend en outre une étape E3.1 de contrôle d'abordage.

Ainsi et selon l'invention, cette étape permet de contrôler une liaison mécanique susceptible d'être réalisée par le mécanisme d'abordage d'un dispositif de neutralisation.

Avantageusement et selon l'invention, l'étape E4 de commande d'un effecteur commandable s'effectue en outre en fonction de l'identification dudit satellite cible et du contrôle de l'abordage.

Ainsi et selon l'invention, la commande de l'effecteur commandable entre son état actif et passif peut être gérée de manière autonome en fonction de l'abordage, et notamment du positionnement du mécanisme d'abordage sur ledit satellite cible et la sécurisation de la liaison mécanique.

### Liste des figures

D'autres buts, caractéristiques et avantages de l'invention apparaîtront à la lecture de la description suivante donnée à titre uniquement non limitatif et qui se réfère aux figures annexées dans lesquelles :
- [Fig.1] représente schématiquement un dispositif de neutralisation selon un mode de réalisation de l'invention.
- [Fig.2] représente schématiquement une étape d'abordage selon le mode de réalisation de la [Fig.1].
- [Fig.3] représente schématiquement les interactions dudit dispositif de neutralisation et de son environnement selon un mode de réalisation de l'invention.
- [Fig.4] représente schématiquement les étapes du procédé de neutralisation selon un mode de réalisation de l'invention.

### Description détaillée d'un mode de réalisation de l'invention

Sur les figures, les échelles et les proportions ne sont pas strictement respectées, et ce, à des fins d'illustration et de clarté.

Dans toute la description détaillée qui suit en référence aux figures, sauf indication contraire, chaque élément du dispositif de neutralisation selon l'invention est décrit tel qu'il est agencé lors de son emploi.

Les éléments identiques, similaires ou analogues, sont désignés par les mêmes références dans toutes les figures.

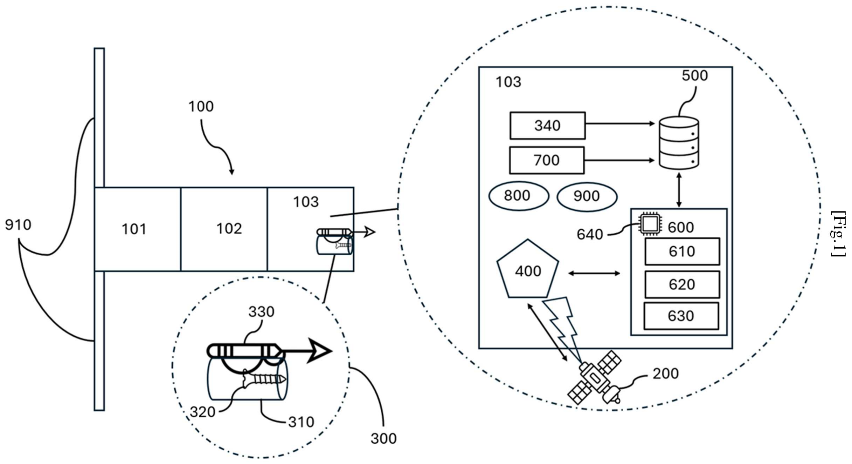

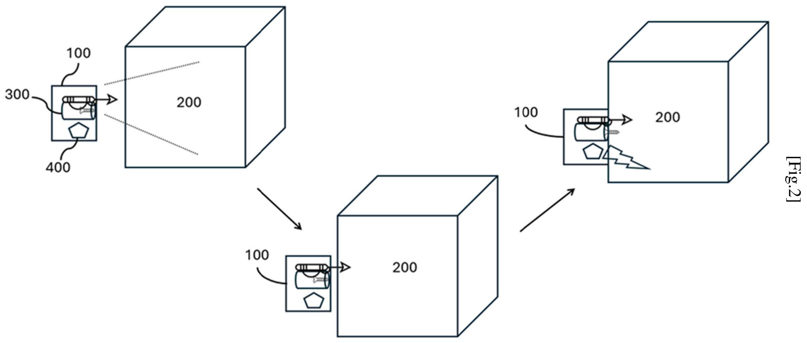

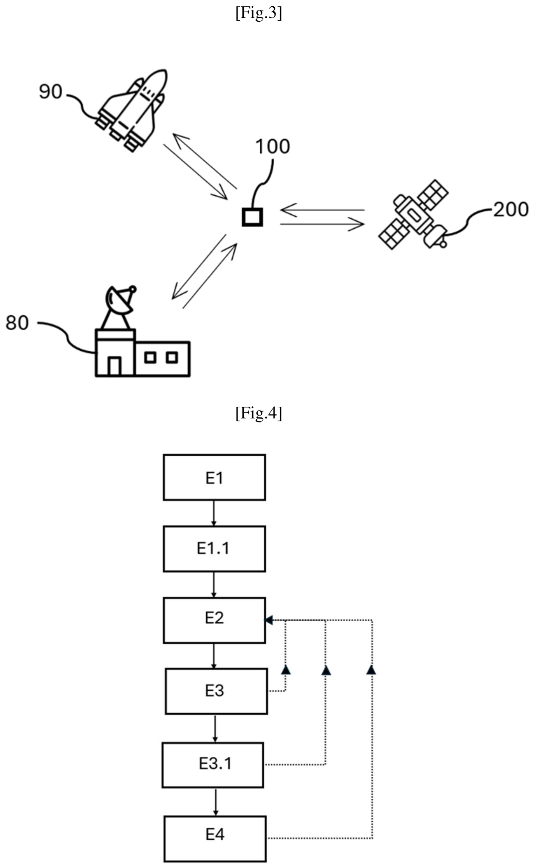

En référence aux [Fig.1], [Fig.2] et [Fig.3], le dispositif de neutralisation 100 décrit est un dispositif destiné à être embarqué dans un véhicule spatial 90 de type navette ou vaisseau spatial susceptible d'être lancé ou non à partir d'un lanceur terrestre de type fusée. Le dispositif 100 est un nanosatellite comprenant au moins une unité cubique (U), préférentiellement trois unités cubiques 101, 102 et 103 (3U). L'unité 103 peut comprendre une avionique similaire ou différente et des équipements similaires ou différents des autres unités cubiques (U). Dans le mode de réalisation décrit, les différents éléments du dispositif de neutralisation 100 seront ceux embarqués dans l'unité cubique 103. L'unité cubique 101 comprend une paire de panneaux solaires 910.

Ledit dispositif de neutralisation 100 est mis en orbite attaché à un véhicule spatial 90. Ledit véhicule spatial 90 se place sur une trajectoire proche de celle d'un satellite artificiel, dit satellite cible 200 et estime, au moyen de son avionique, et des informations d'opération d'une base terrestre 80, l'orbite de la cible 200.

Le dispositif de neutralisation 100 est ensuite séparé du véhicule spatial 90 et peut mettre en œuvre son système propulsif 800 pour se rapprocher de la cible 200 le cas échéant.

Le dispositif 100 comprend des moyens de communication et des capteurs 700, dont au moins un télémètre et un lidar, pour pouvoir mesurer la position de la cible. La communication peut se faire à l'aide d'émetteur/récepteur radiofréquence bas débit et omnidirectionnel permettant d'émettre et de recevoir des informations d'opération relatives à l'environnement dudit dispositif de neutralisation 100 incluant les informations relatives audit satellite cible 200, au véhicule spatial 90 ou encore à une base terrestre 80 comme présenté sur la figure [Fig.3]. Plus particulièrement le dispositif peut recevoir des informations d'opération relatives audit satellite cible provenant dudit véhicule spatial, de ladite base terrestre ou des deux.

En outre, le dispositif de neutralisation comprend une unité d'acquisition 500 configurée pour recevoir lesdites informations d'opération provenant des capteurs 700 et des données d'abordages 340. Dans le mode de réalisation décrit, les informations d'opération comprennent les données issues des capteurs 700, les données représentatives de l'environnement dudit dispositif 100, les données représentatives dudit satellite cible 200 et les données 340 relatives au mécanisme d'abordage.

Le dispositif de neutralisation 100 comprend une unité de traitement 600 configurée pour traiter les informations d'opération acquises par ladite unité d'acquisition 500.

L'unité de traitement 600 comprend par exemple un dispositif informatique qui doit être entendu au sens large (ordinateur, pluralité d'ordinateurs, serveur virtuel sur internet, serveur virtuel sur Cloud, serveur virtuel sur une plateforme, serveur virtuel sur une infrastructure locale, réseaux de serveurs, etc.). Ce dispositif informatique comprend typiquement un ou plusieurs calculateurs 640 et éventuellement une ou plusieurs mémoires comprenant des instructions de routines logicielles utilisées par l'unité de traitement.

Le calculateur 640 est un circuit électronique conçu pour manipuler et/ou transformer des données représentées par des quantités électroniques ou physiques dans des registres du calculateur 640 et/ou des mémoires en d'autres données similaires correspondant à des données physiques dans les mémoires de registres ou d'autres types de dispositifs d'affichages, de dispositifs de transmission ou de dispositifs de mémorisation.

En tant qu'exemples spécifiques, le calculateur 640 comprend des équipements matériels tels qu'un processeur monocœur ou multicœurs (tel qu'une unité de traitement centrale (CPU), une unité de traitement graphique (GPU)) ainsi que des modules. Le calculateur 102 du mode de réalisation décrit est un calculateur spatial conçu et adapté pour répondre aux normes spatiales.

Le dispositif de neutralisation 100 comprend un mécanisme d'abordage 300 configuré pour relier mécaniquement ledit dispositif 100 avec le satellite cible 200.

Le mécanisme d'abordage 300 comprend un harpon 330 configuré pour s'ancrer sur le satellite cible 200. En outre, le mécanisme d'abordage 300 comprend un moyen de fixation 320 tel qu'une cheville autoforeuse et un organe de commande 310, configuré pour déclencher le mécanisme d'abordage. Ledit organe 310 peut être configuré pour être commandé par ladite unité de traitement 600 ou par des moyens de contrôle externe audit dispositif de neutralisation 100.

Le mécanisme d'abordage 300 peut comprendre un ou plusieurs moteurs respectivement employés pour le harpon 300 ou le moyen de fixation 320. En outre, la percussion initiale du harpon 330 sur la cible 200 permet au dispositif de neutralisation 100 d'établir un premier contact, tandis que l'action de la cheville autoforeuse du moyen de fixation 320 permet d'assurer la liaison et la fixation du mécanisme d'abordage. Avantageusement, l'emploi d'une cheville autoforeuse selon ce mode de réalisation permet de limiter la production de débris spatiaux et de sécuriser l'abordage.

Afin d'assurer le positionnement et l'emplacement le plus propice à l'abordage, l'unité de traitement 600 comprend également un module d'identification 620 configuré pour identifier le satellite cible 200. Ce module peut compiler et réunir des données issues des informations d'opération et/ou de banque de données relatives aux satellites et aux différents équipements et systèmes embarqués. De manière avantageuse, le module 620 d'identification permet de compléter le mécanisme d'abordage 300 et les différents capteurs 700 pour assurer le meilleur emplacement d'abordage sur la cible 200.

Une fois l'abordage réalisé, l'unité de traitement peut recevoir et traiter les informations 340 représentatives du mécanisme d'abordage 300 afin de permettre audit dispositif de neutralisation 100 de contrôler la bonne réalisation de l'abordage et l'ancrage du moyen de fixation 320 audit satellite cible 200.

L'abordage réalisé par le dispositif 100 du mode de réalisation décrit est illustré de manière schématique sur la [Fig.3].

Dans cette figure, le dispositif 100 effectue une approche et a identifié le satellite cible 200 selon les moyens précédemment exposés. L'unité de traitement 600 permet le calcul d'une trajectoire permettant au mécanisme d'abordage 300 d'enclencher le tir du harpon 330 en fonction de différents paramètres tels que la position et la vitesse de la cible 200. Une fois que le harpon 330 a pénétré la cible 200, un moteur d'entrainement de la cheville autoforeuse resserre et solidifie la liaison mécanique obtenue entre le dispositif de neutralisation 100 et la cible 200.

Le dispositif de neutralisation 100 désormais positionné sur la cible 200 peut recevoir et communiquer des informations d'opération relatives à la cible à un véhicule spatial 90, une base terrestre 80 ou encore stocker et traiter lesdites informations afin d'évaluer le succès de l'abordage.

Le dispositif 100 comprend en outre un effecteur commandable 400 configuré pour présenter un état, dit état passif dans lequel il n'altère pas le mode de fonctionnement nominal dudit satellite cible 200, et un état, dit état actif dans lequel il altère ledit mode de fonctionnement nominal dudit satellite cible 200. Dans le mode de réalisation décrit et de manière non limitative, l'effecteur commandable 400 peut être une roue à inertie comprenant un balourd.

La commande dudit effecteur commandable 400 est réalisée par un module 610 de commande effecteur configuré pour pouvoir basculer ledit effecteur commandable 400 dudit état passif ou dit état actif et inversement, une fois ledit mécanisme d'abordage 300 relié mécaniquement audit satellite cible 200, en fonction desdites informations d'opération et/ou de l'état dudit satellite cible 200.

De cette manière, le dispositif de neutralisation 100, peut sur commande activer l'effecteur commandable 400.

En outre le dispositif 100 peut envoyer des informations d'opération, notamment sa télémétrie pour rendre compte d'une évaluation de l'effecteur commandable 400 sur le satellite cible.

Le dispositif 100 peut en conséquence alterner les phases entre l'état actif et l'état passif dudit effecteur commandable.

La [Fig.4] représente schématiquement les étapes du procédé de neutralisation mis en œuvre par le dispositif de neutralisation selon un mode de réalisation de l'invention.

La succession des étapes est représentée par des flèches pleines. Toutefois, chacune des étapes E3, E3.1 et E4 peut reboucler avec une étape E2 de traitement des informations d'opérations afin que ledit dispositif cible puisse contrôler en permanence les différentes opérations réalisées.

## Revendications

1. Dispositif (100) de neutralisation d'un satellite artificiel, dit satellite cible (200), ledit satellite cible présentant au moins un mode de fonctionnement, dit mode nominal, **caractérisé en ce que** ledit dispositif (100) de neutralisation comprend :
- un mécanisme d'abordage (300) configuré pour pouvoir relier mécaniquement ledit dispositif (100) de neutralisation et ledit satellite cible (200) ;
- un effecteur commandable (400) configuré pour présenter un état, dit état passif dans lequel il n'altère pas le mode de fonctionnement nominal dudit satellite cible, et un état, dit état actif dans lequel il altère ledit mode de fonctionnement nominal dudit satellite cible ;
- une unité d'acquisition (500) d'informations représentatives dudit satellite cible et de l'environnement dudit dispositif de neutralisation, dites informations d'opération ;
- une unité de traitement (600) configurée pour traiter lesdites informations d'opération acquises, et comprenant un module de commande, dit module de commande effecteur (610), configuré pour pouvoir basculer ledit effecteur commandable (400), dudit état passif audit état actif et inversement, une fois ledit mécanisme d'abordage (300) relié mécaniquement audit satellite cible (200), en fonction desdites informations d'opération ;
ledit dispositif de neutralisation étant configuré pour activer sur commande ledit effecteur commandable une fois ce dernier relié audit satellite cible, afin de perturber ou altérer ledit mode nominal dudit satellite cible, de manière temporaire ou définitive.

2. Dispositif selon la revendication 1, **caractérisé en ce qu'**il comprend en outre une pluralité de capteurs (700) dont au moins un moyen de mesure de distance, configuré pour acquérir des données de distance entre ledit dispositif et ledit satellite cible

3. Dispositif selon la revendication 2, **caractérisé en ce que** les informations d'opération sont des informations provenant du sol, d'un véhicule spatial, ou encore des capteurs dudit dispositif de neutralisation (100).

4. Dispositif selon l'une des revendications précédentes, **caractérisé en ce que** ladite unité de traitement comprend en outre un module d'identification (620), configuré pour identifier ledit satellite cible (200) à partir desdites informations d'opération.

5. Dispositif selon l'une des revendications précédentes **caractérisé en ce que** ladite unité de traitement comprend en outre un module de contrôle d'abordage (630), configuré pour contrôler la liaison mécanique effectuée par ledit mécanisme d'abordage (300) entre ledit dispositif de neutralisation (100) et ledit satellite cible (200).

6. Dispositif selon l'une des revendications précédentes **caractérisé en ce que** le mécanisme d'abordage comprend en outre un moyen de fixation (320) configuré pour assurer une liaison permanente entre ledit dispositif de neutralisation (100) et ledit satellite cible (200).

7. Dispositif selon la revendication 6, **caractérisé en ce que** le moyen de fixation (320) assurant la liaison entre ledit dispositif de neutralisation (100) et ledit satellite cible (200) est choisi parmi une cheville autoforeuse, une colle, une mousse expansive, un filin à lasso, un aimant permanent, une agrafe, une pince motorisée ou une soudure.

8. Dispositif selon l'une des revendications précédentes **caractérisé en ce que** l'effecteur commandable (400) est choisi parmi un générateur de couple ou de vibrations, un générateur de décharge électrique, un générateur d'ondes électromagnétiques, un générateur de chaleur ou de froid, ou un générateur d'aérosols.

9. Dispositif selon l'une des revendications précédentes, **caractérisé en ce que** le mécanisme d'abordage (300) est un harpon.

10. Dispositif selon l'une des revendications précédentes, **caractérisé en ce qu'**il comprend en outre un système de propulsion (800).

11. Dispositif selon l'une des revendications précédentes **caractérisé en ce qu'**il comprend en outre un système (900) de production et de stockage d'énergie.

12. Procédé de neutralisation d'un satellite artificiel, dit satellite cible (200), ledit satellite cible (200) présentant au moins un mode de fonctionnement nominal, ledit procédé étant **caractérisé en ce qu'**il comprend les étapes suivantes :
- une étape E1 d'acquisition d'informations représentatives dudit satellite cible (200) et de l'environnement dudit dispositif de neutralisation (100), dites informations d'opération ;
- une étape E2 de traitement desdites informations d'opération ;
- une étape E3 d'abordage dudit satellite cible (200) ;
- une étape E4 de neutralisation dudit satellite cible (200) en fonction desdites informations d'opération.

13. Procédé selon la revendication 12, **caractérisé en ce qu'**il comprend en outre une étape E1.1 d'identification dudit satellite cible (200).

14. Procédé selon la revendication 13, **caractérisé en ce qu'**il comprend en outre une étape 3.1 de contrôle d'abordage.

15. Procédé selon les revendications 13 à 14, **caractérisé en ce que** l'étape E4 de commande d'un effecteur commandable (400) s'effectue en outre en fonction de l'identification dudit satellite cible (200) et du contrôle de l'abordage.
